# EUROPÄISCHE PATENTSCHRIFT

(11) **EP 2 828 943 B1**
(45) Veröffentlichungstag und Bekanntmachung des Hinweises auf die Patenterteilung: **24.08.2016**
(21) Anmeldenummer: 13715126.2
(22) Anmeldetag: 13.03.2013
(51) Int. Cl.: H02G 3/04

(54) **LEITUNGSAUFNAHMEELEMENT**
PIPE RECEIVING ELEMENT
ELÉMENT DE RÉCEPTION D'UNE CANALISATION

(30) Priorität: 19.03.2012 DE 202012002733 U
(43) Veröffentlichungstag der Anmeldung: 28.01.2015
(73) Patentinhaber: Rixen, Wolfgang, 42699 Solingen (DE); Pies, Gerrit, 42699 Solingen (DE)
(72) Erfinder: Rixen, Wolfgang, 42699 Solingen (DE); Pies, Gerrit, 42699 Solingen (DE)
(74) Vertreter: Draudt, Axel Hermann Christian
(86) Internationale Anmeldenummer: PCT/EP2013/000736
(87) Internationale Veröffentlichungsnummer: WO 2013/139449

(56) Entgegenhaltungen:
- EP-A1- 1 320 160
- EP-A2- 1 160 949
- WO-A1-2009/073765
- FR-A- 1 352 504
- GB-A- 2 130 022

## Beschreibung

Die Erfindung besteht aus einem Leitungsaufnahmeelement mit einer Basis, mindestens zwei sich von der Basis in gleicher Richtung erstreckenden Seitenteilen und mit einer mindestens die freien Enden der Seitenteile schließenden Abdeckung zur Ausbildung mindestens einer eine Leitung aufnehmenden Kammer.

Im Zusammenhang mit dem Arbeitsplatzsystem der Anmelder ist ein Bedarf an Lösungen zum einfachen und optisch sauberen Verlegen von elektrischen, pneumatischen etc. Leitungen entstanden.

Zwar bieten die Anmelder bereits verschiedene (Aluminium) Kabelkanäle und auch ein modulares System für Kabelkanäle an, nur bedürfen diese Produkte einer detaillierten Planung. Dies liegt daran, dass die starren Aluminiumkanäle nur auf einer entsprechenden Säge verarbeitet werden können, die auch zum Ablängen von Konstruktionsprofilen dient.

Zusätzlich müssen zur Montage Bohrungen angebracht oder aufwendige Verbindungstechniken eingesetzt werden. Die gesägten Enden der Profile sind steif und scharfkantig, was zusätzliche Bauelemente, wie zum Beispiel Kantenband oder Kabeldurchlässe oder ähnliches zum Schutz der ein- und austretenden Leitungen erforderlich macht.

Leitungsaufnahmeelemente sind aus FR 1352504 A und WO 2009/073765 A1 bekannt.

Dieses deckt sich zwar mit den Wünschen der Kunden der Anmelder, nur entsteht der präzise Bedarf an Leitungsführungen üblicherweise erst bei Ausrüstung der Gestelle, Tische oder ähnliches. Somit müsste nach dem Bau des Grundgerüsts sozusagen "nachprojektiert" und die entsprechenden Kanäle anschließend zugeschnitten und bearbeitet werden.

Dies erzeugt zusammen mit den qualitativ hochwertigen Produkten sehr hohe Kosten, welche erfahrungsgemäß von den meisten Anwendern gemieden werden. Nach derzeitigem Kenntnisstand ist aus dem allgemeinen Stand der Technik keine Lösung bekannt.

Der Erfindung liegt daher die Aufgabe zugrunde, ein Leitungsaufnahmeelement der eingangs genannten Art anzugeben, das mit einfachsten technischen Mitteln an Ort und Stelle bei der Ausrüstung von Gestellen, Tische oder ähnlichem eine Anpassung der Leitungsaufnahmeelemente mit sehr geringem Aufwand ermöglicht und gleichzeitig die Erstellungszeit für derartige Bauten deutlich zu reduzieren.

Diese Aufgabe wird bei einem Leitungsaufnahmeelement der eingangs genannt Art erfindungsgemäß durch die Merkmale des Anspruchs 1 gelöst.

Der Kern der Erfindung besteht darin, die benötigten Leitungsaufnahmeelemente an Ort und Stelle zu befestigen, um die vorzugsweise elektrischen, pneumatischen oder Flüssigkeit führenden Leitungen oder ähnliches durch einfaches Eindrücken dieser Leitungen in die Kammer aufgrund des Öffnungsvermögens der beiden Lippen zu ermöglichen. Außerdem können diese Leitungsaufnahmeelemente einfach mit einer Schere abgelängt werden.

Auf diese Art und Weise werden mehrere Punkte der Aufgabenstellung hier am Beispiel eines Aluminiumprofils mit hinterschnittenen Nuten gelöst:
- die Leitungen werden unsichtbar in einem geschlossenen Profil entlang der Gerüststreben geführt;
- die Befestigung erfolgt durch Aufkleben bzw. durch Eindrückung eines Vorsprunges in eine Nut des Aluminiumprofils ohne weitere Bearbeitung;
- die Leitungen können an beliebigen Stellen des Profils einund austreten, ohne das Profil zu beschädigen oder auch gar zu bearbeiten, wodurch diese Veränderungen der Ausrüstung einfacher und sauberer durchführbar sind;
- die Enden des Profils können - wie die Lippen - elastisch sein und daher die Notwendigkeit eines zusätzlichen Leitungsschutzes vermeiden;
- das Zuschneiden der erforderlichen Stücke kann von einem Handwerker während der Ausrüstung am Arbeitsort erfolgen, da keine Säge mehr erforderlich ist;
- die Verarbeitung ist spanlos und daher äußerst sauber;
- flache Winkel können auch durch die Elastizität des Werkstoffes überbrückt werden, ohne das Profil zu trennen; und
- die Leitungen werden in den getrennten Hohlräumen einzeln geführt, so dass sie jederzeit auch einzeln entfernt bzw. getauscht werden können, sie verheddern sich daher nicht ineinander wie in einem einzelnen Kanal.

Wie bereits oben schon angedeutet, ist es möglich, dass die Befestigungseinrichtung eine Klebeschicht ist, mit der das Leitungsaufnahmeelement an beliebigen Stellen anbringbar ist.

Erfindungsgemäß ist die Verwendung von entsprechenden Profilen, wenn die Befestigungseinrichtung mindestens ein an der Basis angeordneter und den Seitenteilen oder Stegen entgegengesetzt sich erstreckender Vorsprung ist, dessen Querschnittsform in Längsrichtung gesehen an mindestens einem Hinterschnitt mindestens einer in einem Profilstab angeordneten Hinterschnittnut in Eingriff bringbar ist.

Eine besonders feste und aber auch einfache Befestigungsart des Leitungsaufnahmeelements ist für Profilstäbe mit hinterschnittenen Nuten schon ganz einfach möglich. Dazu ist es vorteilhaft, wenn der mindestens eine Vorsprung an dem Leitungsaufnahmeelement in Längsrichtung gesehen derart an der Basis verläuft, dass das Leitungsaufnahmeelement an die Außenkontur eines Profilstabes angepasst ist.

Es gibt auch Profilstäbe mit hinterschnittenen Nuten, die eine rechteckförmige Form aufweisen. Dabei ist es dann möglich, an der Längsseite dieser Profile mindestens zwei Vorsprünge vorzusehen. Wenn dies der Fall ist, ist es besonders vorteilhaft, wenn mindestens zwei Vorsprünge an der Basis angeordnet sind.

Erfindungsgemäß bestehen die Basis, die Stege, die Abdeckung und der Vorsprung einstückig aus einem elastischen Material.

Zur besseren Anpassung der Federeigenschaften der verschiedenen Elemente sind die Basis, die Stege, die Abdeckung und der Vorsprung einstückig aus unterschiedlichen Materialien bestehen, wobei das Abdeckungsmaterial und das Vorsprungsmaterial elastischer als das Stegmaterial.

Eine besonders gute Anpassung der Federeigenschaften der Stege ist dann gegeben, wenn die Stege aus dem Abdeckungsmaterial und dem Basismaterial ungemischt, aber einstückig ausgebildet sind.

Das ist zum Beispiel dadurch möglich, dass das Abdeckungsmaterial zu Beginn des Steges die größte Stärke aufweist, die in Richtung der Basis ein Verhältnis zur Stärke des Steges immer geringer wird.

Als besonderen Schutz, aber auch für eine optisch schöne Form ist es vorteilhaft, wenn das Abdeckungsmaterial auch an den Außenflächen der beiden äußeren Stege diese umhüllt. Hauptsächlich in Abhängigkeit von dem aufzubringenden Druck zur Befestigung der Leitungsaufnahmeelemente ist es vorteilhaft, wenn die Stärke der Stege von den Stärken der Abdeckung und der Basis abweicht.

Dabei ist es möglich, dass die Stege unterschiedliche Stärken aufweisen.

Damit eine noch größere Sicherheit gegeben ist, dass nach einem längeren Gebrauch die Lippen wieder in ihre ursprüngliche Form zurückgehen, ist es vorteilhaft, wenn die Anschlüsse der Übergänge von den Seitenteilen oder Stegen mit der Abdeckung entweder mit dem Stegmaterial oder mit dem Abdeckungsmaterial oder mit einer Kombination beider Materialien verstärkt sind.

Weitere Vorteile und Merkmale der Erfindung ergeben sich aus der folgenden Beschreibung mehrerer Ausführungsbeispiele sowie aus den Figuren auf die Bezug genommen wird. Es zeigen:
- Fig.1: eine perspektivische Darstellung eines ersten Ausführungsbeispieles eines Leitungsaufnahmeelements hier in Verbindung mit einem Profilstab;
- Fig.2: den Querschnitt des Leitungsaufnahmeelements gemäß Fig.1;
- Fig.3: den Querschnitt der Anordnung gemäß Fig.1; und
- Fig.4: ein weiteres Ausführungsbeispiel eines Leitungsaufnahmeelementes mit unterschiedlichen Materialien.

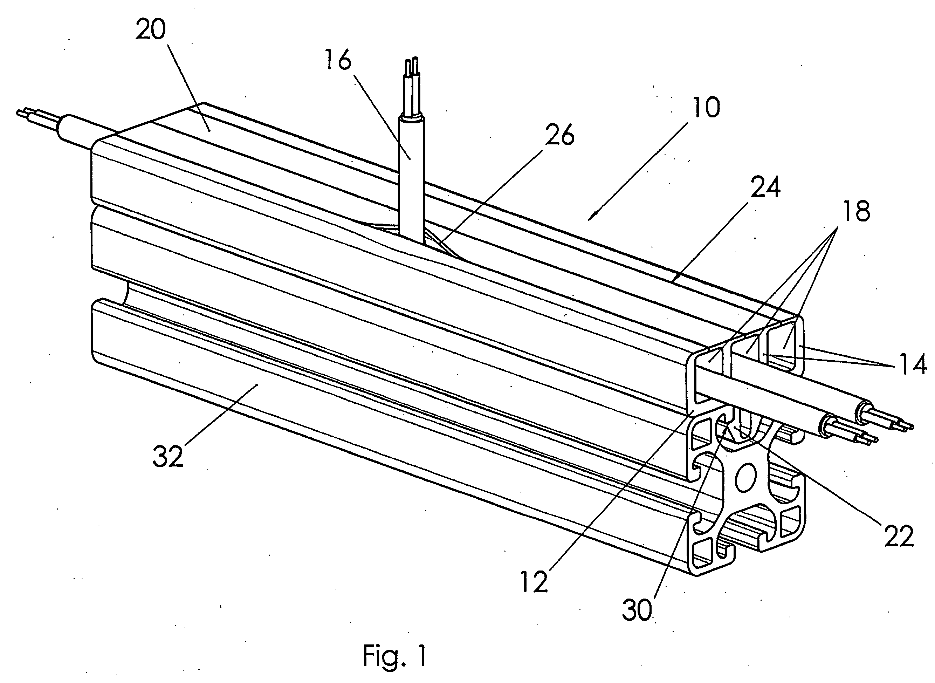

Anhand der Figuren 1 bis 4 werden nunmehr zwei Ausführungsbeispiele eines Leitungsaufnahmeelements 10 näher beschrieben. Dabei bedeuten gleiche Bezugsziffern gleiche Merkmale, soweit nichts anderes ausgesägt ist.

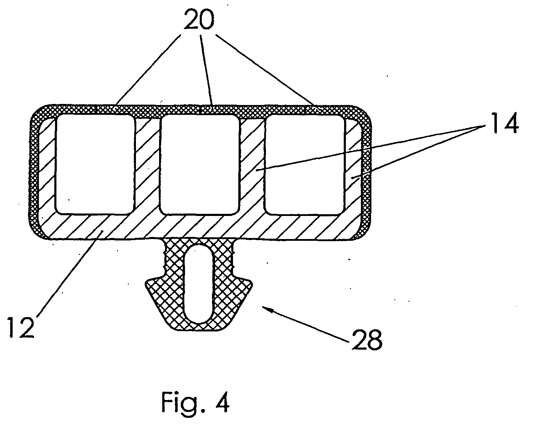

Das erste Ausführungsbeispiel, das in den Figuren 1 bis 3 dargestellt ist, weist auch wie das Ausführungsbeispiel gem. Figur 4 eine Basis 12 auf. Von dieser Basis 12 erstrecken sich bei diesem Ausführungsbeispiel in gleicher Richtung vier Seitenteile 14, die bei dieser Konstellation drei Kammern 18 zur Aufnahme jeweils einer Leitung 16 bilden.

Die drei Kammern 18 werden auf der der Basis 12 entgegen gesetzten Seite mit einer sogenannten Abdeckung 20 verschlossen.

Die Besonderheit bei allen Ausführungsbeispielen besteht dann nun darin, dass diese Abdeckung 20 jeweils etwa in der Mitte der Kammerlängsachse jeweils mit einem Längsschlitz 24 versehen sind.

Aufgrund dieses Längsschlitzes 24 sind die Bereiche der Kammern 18 mit beweglichen Lippen 26 versehen. Da das Material für die Leitungsaufnahmeelemente 10 aus mindestens einem Kunststoff besteht, sind diese Lippen 26 sowohl in Richtung der Kammer 18 als auch nach außen bewegbar.

Obwohl zur Befestigung des Leitungsaufnahmeelements 10 die Basis 12 mit einem Klebestreifen versehen werden kann, um dieses Leitungsaufnahmeelement 10 an gewünschter Position, die selbstverständlich für eine Klebeverbindung geeignet sein muss, anzubringen, ist eine andere Befestigungsmöglichkeit ausgewählt worden.

Die gezeigten Ausführungsbeispiele weisen diese andere Verbindungsmöglichkeit auf, die in diesem Falle in Hinterschnittnuten 34 eines Profilstabes 32 eingebracht sind. Bei dieser Verbindungsart handelt es sich um einen Vorsprung 28, der aufgrund seiner Querschnittsform in Längsrichtung gesehen an den Hinterschnitt 30 der Hinterschnittnut 34 elastisch einrastend hält.

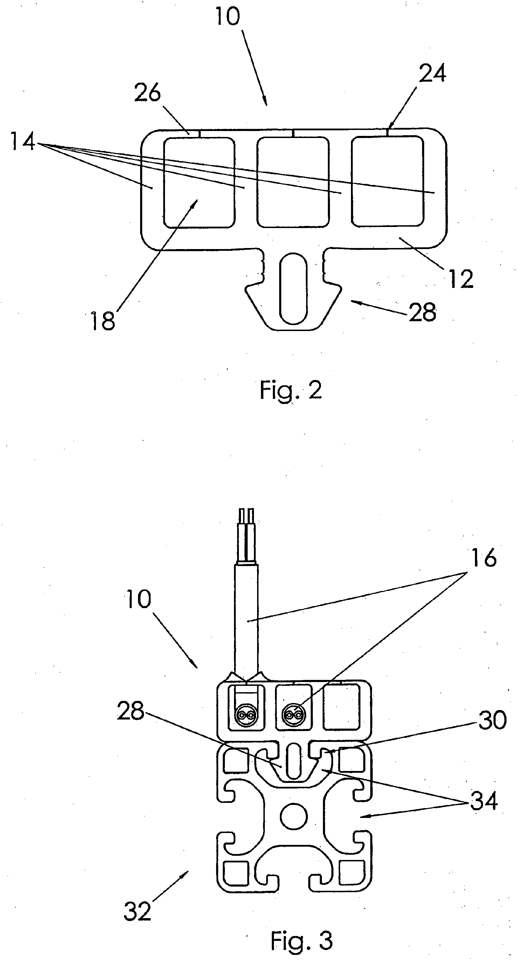

Wie sich aus den Figuren 1 und 3 ergibt, können Leitungen 16, die in diesem Fall elektrische Leitungen sind, nach Anbringung der Leitungsaufnahmeelemente bzw. des Leitungsaufnahmeelements 10 durch Auflegen auf einen Längsschlitz 24 und festes Eindrücken durch Verdrängen der Lippen 26 in Richtung der Kammern 18 eingedrückt werden kann.

Außerdem ist in den beiden Figuren gezeigt, wie an beliebiger Stelle eine Leitung 16 wieder aus der Kammer 18 heraustritt, und zwar unter Ausbildung einer lang gestreckten Öffnung der beiden Lippen 26.

In umgekehrter Weise kann ganz einfach das eingelegte Kabel 16 auch wieder entfernt und durch ein neues oder anderes Kabel 16 ersetzt werden. Anhand des in Figur 2 gezeigten Querschnittes, aber auch anhand des in Figur 4 gezeigten Querschnittes des zweiten Ausführungsbeispiels, ist erkennbar, dass durch Variieren der einzelnen Wandstärken unterschiedliche Federspannungen bzw. sogenannte Federkonstanten insbesondere für die Lippen 26 durch Variieren der Wandstärken möglich ist.

Diese Variation der unterschiedlichen Federkräfte zum Zurückführen der Lippen 26 in ihre Ursprungsposition ist noch deutlicher entnehmbar aus dem Querschnitt von Figur 4, welche das zweite Ausführungsbeispiel zeigt. Hier bestehen die Basis 12 und die Stege 14 aus einem Kunststoffmaterial, wohingegen das Material der Abdeckung 20 und des Vorsprungs 28 nicht nur untereinander sondern auch noch zu dem Basisstegkomplex unterschiedliches Material aufweist.

Gemäß Figur 4 sind die Stärken der äußeren Stege 14 geringer als die derjenigen der beiden inneren.

Um wieder im Querschnitt gesehen zu einem einheitlichen Dickenverhältnis zu kommen, ist bei dem zweiten Ausführungsbeispiel gemäß Figur 4 die Abdeckung 20 auch an den Außenoberflächen der beiden äußersten Stege 14 umhüllend bis zur Basis angeordnet. Dies dient nicht nur zum Schutz der Oberfläche des Leitungsaufnahmeelements 10, sondern auch einem einheitlichen optischen Erscheinungsbild.

Was in den Figuren nicht gezeigt, aber auch noch möglich ist, besteht darin, dass das Abdeckungsmaterial zu Beginn des Steges 14 die größte Stärke aufweist, die in Richtung der Basis 12 im Verhältnis zur Stärke des Steges 14 immer geringer wird. Dies hat keine optische Ursache, sondern dient der besseren Einstellung der Federkonstante der Stege 14 im Zusammenspiel mit den Lippen 26.

Eine weitere nicht dargestellte Möglichkeit besteht auch noch darin, die Anschlüsse oder Übergänge der Seitenteile bzw. Stege 14 mit der Abdeckung 20 entweder mit dem Stegmaterial oder mit dem Abdeckungsmaterial oder mit einer Kombination beider Materialien zu verstärken. Dadurch wird die Kraft auf die Lippen 24 an der Stelle, an der eine Leitung 16 lange herausgetreten war, deutlich erhöht. Dabei ist zu bemerken, dass die Verstärkungen sich in die Kammern 18 hineinerstrecken, um das optische Erscheinungsbild nicht zu stören. Es kann aber auch oberhalb der Stege und außerhalb auf der Abdeckung 20 diese Verstärkung angeordnet werden.

Des weiteren ist es selbstverständlich möglich, weniger, aber auch mehr als die dargestellten Kammern 18 für das Leitungsaufnahmeelement vorzusehen. Die Anzahl der Vorsprünge 28 ist nicht abhängig von der Anzahl der Kammern 18. Bei großen Leitungsaufnahmeelementen 10 können mehrere Vorsprünge 28 sinnvoll sein.

### Bezugszeichenliste:

- 10: Leitungsaufnahmeelement
- 12: Basis
- 14: Seitenteil, Steg
- 16: Leitung
- 18: Kammer
- 20: Abdeckung
- 22: Befestigungseinrichtung
- 24: Längsschlitz
- 26: Lippe
- 28: Vorsprung
- 30: Hinterschnitt
- 32: Profilstab
- 34: Hinterschnittnut

## Patentansprüche

1. Leitungsaufnahmeelement (10) mit einer Basis (12), mindestens zwei sich von der Basis (12) In glelcher Richtung erstreckenden Seitenteilen oder Stegen (14) und mit einer mindestens die freien Enden der Seitenteile oder Stege (14) schließenden Abdeckung (20) zur Ausbildung mindestens einer eine Leitung (16) aufnehmenden Kammer (18), **dadurch gekennzeichnet, dass** die Basis (12) auf der der Abdeckung (20) abgewandten Selte mit einer Befestigungseinrichtung (22) versehen ist, die Befestigungseinrichtung mindestens ein an der Basis (12) angeordneter und den Seitenteilen oder Stegen (14) entgegengesetzt sich erstreckender Vorsprung (28) ist, dessen Querschnittsform in Längsrichtung gesehen an mindestens einem Hinterschnitt (30) mindestens einer in einem Profilstab (32) angeordneten Hinterschnittnut (34) in Eingriff bringbar ist, alle Bestandteile aus mindestens einem Kunststoffmaterial bestehen und dass die mindestens eine Abdeckung (20) mit mindestens einem in Längsrichtung der Kammer (18) verlaufenden Längsschlitz (24) versehen ist, wodurch die Abdeckung (20) pro Kammer (18) aus zwei bewegbaren Lippen (26) besteht und dass die Basis (12), die Stege (14), die Abdeckung (20) und der Vorsprung (28) einstückig aus unterschiedlichen Materiallen bestehen, wobei das Abdeckungsmaterial und das Vorsprungsmaterial elastischer sind als das Stegmaterial.

2. Leitungsaufnahmeelement (10) nach Anspruch 1, **dadurch gekennzeichnet, dass** eine von der mindestens einen Kammer (18) aufzunehmbare Leitung (16) eine elektrische, pneumatische oder eine Flüssigkeit führende Leitung (16) Ist.

3. Leitungsaufnahmeelement (10) nach Anspruch 1, **dadurch gekennzeichnet, dass** der mindestens eine Vorsprung (28) an dem Leitungsaufnahmeelement (10) in Längsrichtung gesehen derart an der Basis (12) verläuft, dass das Leitungsaufnahmeelement (10) an die Außenkontur eines Profilstabes (32) angepasst Ist.

4. Leitungsaufnahmeelement (10) nach Anspruch 1 oder 2, **dadurch gekennzeichnet, dass** mindestens zwei Vorsprünge (28) an der Basis (12) angeordnet sind.

5. Leitungsaufnahmeelement (10) nach einem der Ansprüche 1 bis 4, **dadurch gekennzeichnet, dass** die Basis (12), die Stege (14), die Abdeckung (20) und der Vorsprung (28) einstückig aus einem elastischen Material bestehen.

6. Leitungsaufnahmeelement (10) nach einem der Ansprüche 1 bis 5, **dadurch gekennzeichnet, dass** die Stege (14) aus dem Abdeckungsmaterial und dem Basismaterial ungemischt, aber einstückig ausgebildet sind.

7. Leitungsaufnahmeelement (10) nach einem der Ansprüche 1 bis 6, **dadurch gekennzeichnet, dass** das Abdeckungsmaterial zu Beginn des Seitenteils oder Steges (14) die größte Stärke aufweist, die in Richtung der Basis (12) im Verhältnis zur Stärke des Steges (14) immer geringer wird.

8. Leitungsaufnahmeelement (10) nach einem der Ansprüche 1 bis 7, **dadurch gekennzeichnet, dass** das Abdeckungsmaterial auch an den Außenflächen der beiden äußeren Stege (14) diese umhüllt.

9. Leitungsaufnahmeelement (10) nach einem der Ansprüche 1 bis 8, **dadurch gekennzeichnet, dass** die Stärke der Stege (14) von den Stärken der Abdeckung (20) und der Basis (12) abweicht.

10. Leitungsaufnahmeelement (10) nach Anspruch 8 oder 9, **dadurch gekennzeichnet, dass** die Stege (14) unterschiedliche Stärken aufweisen.

11. Leitungsaufnahmeelement (10) nach einem der Ansprüche 8 bis 10, **dadurch gekennzeichnet, dass** die Anschlüsse der Übergänge von den Seitenteilen (14) oder Stegen (14) mit der Abdeckung (20) entweder mit dem Stegmaterial oder mit dem Abdeckungsmaterial oder mit einer Kombination beider Materialien verstärkt sind.

## Claims

1. Pipe-receiving element (10) having a base (12), at least two lateral parts or webs (14) extending from the base (12) in the same direction, and having a cover (20) closing at least the free ends of the lateral parts or webs (14) in order to form at least one chamber (18) receiving a pipe (16), **characterised in that** the base (12) is provided with a fastening device (22) on the side facing away from the cover (20), the fastening device is at least one projection (28) disposed on the base (12) and extending oppositely to the lateral parts or webs (14), the cross-section of which projection, as seen in the longitudinal direction, can be brought into engagement on at least one undercut (30) of at least one undercut groove (34) disposed in a profiled rod (32), all the components consist of least one synthetic material and that the least one cover (20) is provided with at least one longitudinal slot (24) extending in the longitudinal direction of the chamber (18), whereby the cover (20) consists of two movable lips (26) per chamber (18), and that the base (12), the webs (14), the cover (20) and the projection (28) consist of one piece made from different materials, wherein the cover material and the projection material are more elastic than the web material.

2. Pipe-receiving element (10) as claimed in claim 1, **characterised in that** a pipe (16) to be received by the at least one chamber (18) is an electrical, pneumatic, or liquid-conducting pipe (16).

3. Pipe-receiving element (10) as claimed in claim 1, **characterised in that**, as seen in the longitudinal direction, the at least one projection (28) extends on the pipe-receiving element (10) in such a way on the base (12) that the pipe-receiving element (10) is matched to the outer contour of a profiled rod (32).

4. Pipe-receiving element (10) as claimed in claim 1 or 2, **characterised in that** at least two projections (28) are disposed on the base (12).

5. Pipe-receiving element (10) as claimed in any one of claims 1 to 4, **characterised in that** the base (12), the webs (14), the cover (20) and the projection (28) consist of one piece of an elastic material.

6. Pipe-receiving element (10) as claimed in any one of claims 1 to 5, **characterised in that** the webs (14) are formed from the cover material and the base material unmixed but as one piece.

7. Pipe-receiving element (10) as claimed in any one of claims 1 to 6, **characterised in that**, the cover material has the greatest thickness at the beginning of the lateral part or web (14), this thickness being reduced continuously in relation to the thickness of the web (14) in the direction of the base (12).

8. Pipe-receiving element (10) as claimed in any one of claims 1 to 7, **characterised in that** the cover material also envelopes the two outer webs (14) on the outer surfaces thereof.

9. Pipe-receiving element (10) as claimed in any one of claims 1 to 8, **characterised in that** the thickness of the webs (14) deviates from the thicknesses of the cover (20) and of the base (12).

10. Pipe-receiving element (10) as claimed in claim 8 or 9, **characterised in that** the webs (14) are of different thicknesses.

11. Pipe-receiving element (10) as claimed in any one of claims 8 to 10, **characterised in that** the connections of the transitions from the lateral parts (14) or webs (14) to the cover (20) are reinforced either with the web material or with the cover material or with a combination of both materials.

## Revendications

1. Elément de réception de canalisation (10) avec une base (12), au moins deux parties latérales ou rebords (14) qui s'étendent dans la même direction à partir de la base (12), et un recouvrement (20) qui ferme au moins les extrémités libres des parties latérales ou rebords (14) et qui est destiné à former au moins une chambre (18) recevant une canalisation (16), **caractérisé en ce que** la base (12) est pourvue, sur son côté opposé au recouvrement (20), d'un dispositif de fixation (22), le dispositif de fixation est constitué par au moins une saillie (28) qui est disposée sur la base (12), qui s'étend à l'opposé des parties latérales ou rebords (14) et dont la forme en coupe transversale, vue dans le sens longitudinal, est apte à s'accrocher sur au moins une contre-dépouille (30) d'au moins une rainure contre-dépouillée (34) disposée dans un profilé (32), tous les composants se composent d'au moins une matière plastique, et **en ce que** le ou les recouvrements sont pourvus d'au moins une fente oblongue (24) qui s'étend dans le sens longitudinal de la chambre (18), moyennant quoi le recouvrement (20) se compose pour chaque chambre (18) de deux lèvres mobiles (26), et **en ce que** la base (12), les rebords (14), le recouvrement (20) et la saillie (28) se composent, d'une seule pièce, de matériaux différents, étant précisé que le matériau de recouvrement et le matériau de saillie sont plus élastiques que le matériau de rebord.

2. Elément de réception de canalisation (10) selon la revendication 1, **caractérisé en ce qu'**une canalisation (16) apte à être reçue par la ou les chambres (18) est une canalisation électrique, pneumatique ou faisant passer un liquide.

3. Elément de réception de canalisation (10) selon la revendication 1, **caractérisé en ce que** la ou les saillies (28) sur l'élément de réception de canalisation (10) s'étendent sur la base (12), vue dans le sens longitudinal, de telle sorte que ledit élément de réception de canalisation (10) soit adapté au contour extérieur d'un profilé (32).

4. Elément de réception de canalisation (10) selon la revendication 1 ou 2, **caractérisé en ce qu'**au moins deux saillies (28) sont disposées sur la base (12).

5. Elément de réception de canalisation (10) selon l'une des revendications 1 à 4, **caractérisé en ce que** la base (12), les rebords (14), le recouvrement (20) et la saillie (28) se composent, d'une seule pièce, d'un matériau élastique.

6. Elément de réception de canalisation (10) selon la revendication 1, **caractérisé en ce que** les rebords (14) sont formés à partir du matériau de recouvrement et du matériau de base, sans mélange mais d'une seule pièce.

7. Elément de réception de canalisation (10) selon l'une des revendications 1 à 6, **caractérisé en ce que** le matériau de recouvrement présente au commencement de la partie latérale ou rebord (14) la plus grande épaisseur, qui diminue de plus en plus en direction de la base (12), par rapport à l'épaisseur du rebord (14).

8. Elément de réception de canalisation (10) selon l'une des revendications 1 à 7, **caractérisé en ce que** le matériau de recouvrement enrobe les deux rebords extérieurs (14) même sur leur surface extérieure.

9. Elément de réception de canalisation (10) selon l'une des revendications 1 à 8, **caractérisé en ce que** l'épaisseur des rebords (14) est différente de celle du recouvrement (20) et de la base (12).

10. Elément de réception de canalisation (10) selon la revendication 8 ou 9, **caractérisé en ce que** les rebords (14) présentent des épaisseurs différentes.

11. Elément de réception de canalisation (10) selon l'une des revendications 8 à 10, **caractérisé en ce que** les jonctions des transitions entre les parties latérales (14) ou rebords (14) et le recouvrement (20) sont renforcées avec le matériau de rebord ou avec le matériau de recouvrement ou avec une combinaison des deux matériaux.
